# EUROPEAN PATENT SPECIFICATION

(11) **EP 4 585 549 B1**
(45) Date of publication and mention of the grant of the patent: **28.10.2026**
(21) Application number: 25150875.0
(22) Date of filing: 09.01.2025
(51) Int. Cl.: B66B 5/00

(54) **METHOD AND DEVICE FOR DETERMINING SAFETY RISK OF ELEVATOR SYSTEM**
VERFAHREN UND VORRICHTUNG ZUR BESTIMMUNG DES SICHERHEITSRISIKOS EINES AUFZUGSSYSTEMS
PROCÉDÉ ET DISPOSITIF DE DÉTERMINATION DE RISQUE DE SÉCURITÉ D'UN SYSTÈME D'ASCENSEUR

(30) Priority: 12.01.2024 CN 202410053842
(43) Date of publication of application: 16.07.2025
(73) Proprietor: Otis Elevator Company, Farmington, Connecticut 06032 (US)
(72) Inventor: Li, Haiyang, Shanghai, 200335 (CN); Zhu, Fei, Shanghai, 200335 (CN); Chang, Nuomin, Shanghai, 200335 (CN); Gu, Jialiang, Shanghai, 200335 (CN); Huang, Jia, Shanghai, 200335 (CN); Chen, Yalin, Shanghai, 200335 (CN); Kang, Kai, Tianjin, 300211 (CN); Zhu, Rixin, Shanghai, 200335 (CN); Wu, Qing, Tianjin, 300211 (CN); Zhao, Xueqi, Shanghai, 200335 (CN); Huang, Qing, Shanghai, 200335 (CN); Xu, Baoshan, Tianjin, 300211 (CN)
(74) Representative: Winter, Brandl - Partnerschaft mbB

(56) References cited:
- CN-A- 114 626 467
- CN-A- 115 973 868
- CN-A- 116 281 482

## Description

### Technical field

The present application relates to elevator technology and, in particular, to a method and device for determining a safety risk of an elevator system, and a non-transitory computer-readable storage medium storing a computer program for implementing the method.

### BACKGROUND

When a passenger is trapped in a car, the passenger may press an emergency call button inside the car or use a cell phone to make a distress call. In addition, an elevator system may also automatically send an alarm message to a backend system in the event of a suspected trapped event. Rescue personnel will then be dispatched to the scene to implement rescue activities. However, in actual operation, many of the distress events and suspected trapped events are not caused by elevator system failure or may be eliminated automatically with the help of the elevator system's recovery function, so there is no need for the rescue personnel to go to the scene to deal with them. It is always a challenging task for the industry to identify real trapped events and provide assistance while reducing the consumption of rescue resources.

CN 116 281 482 A discloses a method for detecting and predicting an elevator stopping event when people are trapped in an elevator. The prediction method uses a neural network model, wherein elevator state data and trapped person elevator stopping detection result data are combined to serve as training data, and a possible trapped person event in the future is predicted by setting a probability threshold value.

CN 115 973 868 A provides an elevator health assessment method. The method specifically comprises the steps that the maintenance condition, use information and fault parameters of a to-be-evaluated elevator in a maintenance period are obtained; a preset score deduction strategy is adopted, the use information and the fault parameters of the to-be-evaluated elevator are evaluated, and the operation score of the to-be-evaluated elevator is obtained; according to the use information and the fault parameters of the to-be-evaluated elevator, a pre-configured BP neural network model is adopted, and the probability that the to-be-evaluated elevator stops and traps people is obtained; acquiring a health assessment result of the to-be-assessed elevator according to the operation score of the to-be-assessed elevator, the corresponding first weight, the probability that the to-be-assessed elevator stops and traps people and the corresponding second weight; and the maintenance platform carries out maintenance processing on the to-be-evaluated elevator according to the health evaluation result.

CN 114 626 467 A relates to a feature cross elevator trapping time sequence prediction model construction method based on deep learning, an obtained model and a prediction method. The construction method comprises the steps of forming a time sequence by historical information data, transmitting input information into a single-layer full-connection layer and converting the input information into primary abstract features, performing feature interaction, transmitting the input information into an LSTM neural network and obtaining comprehensive time sequence abstract features, transmitting the input information into the full-connection layer and converting the comprehensive time sequence abstract features into predicted trapped person probability, and calculating predicted loss by a cross entropy loss function.

### SUMMARY

The invention is set out in appended set of claims. In accordance with an aspect of the present application, there is provided a method for determining a safety risk of an elevator system. According to the method, a device for determining the safety risk generates a feature vector based at least on operational state data of the elevator system, and subsequently determines a probability of a transport object being trapped in a car of the elevator system using a neural network model. In the above-described method, the feature vector and the probability are an input variable and an output variable of the neural network model, respectively, and the feature vector comprises components corresponding to combinations selected from a plurality of state values of a first category of features. Further, the state values of the first category of features are determined based on the operational state data.

In the above-described method, the feature vector is generated further based on a safety event, and accordingly, the feature vector further comprises components corresponding to combinations of the state values of the first category of features and state values of a second category of features, and the state values of the second category of features are determined based on the safety event.

Optionally, the above-described method further comprises step of generating an assessment result regarding the safety risk based on the probability; or optionally, the above-described method further comprises step of training the neural network model. In the step of training, operating logs of the elevator system are utilized to label training samples for training the neural network model.

In the above-described method, the operational state data describes a plurality of types of operational states of the elevator system, and each state value of the first category of features comprises one of the following state values of one of the types of operational states: i) a state value before occurrence of the safety event; ii) a state value at the time of the occurrence of the safety event; and iii) a state value after the occurrence of the safety event. Optionally, each component of the feature vector corresponds to one of: i) a combination of the state values of the first category of features; ii) a combination of the state values of the first category of features and the state values of the second category of features. Further, step of generating the feature vector comprises: generating a plurality of state values of the first category of features from the operational state data and generating the state values of the second category of features from the safety event, and subsequently generating the feature vector from the state values of the first category of features and the state values of the second category of features.

Optionally, in the above-described method, the step of generating the feature vector is performed in response to the occurrence of the safety event.

Optionally, in the above-described method, the types of operational states include one or more of: an elevator system operational mode, a car movement direction, a floor on which the car is located, a car level alignment state, a traction machine movement state, opening and closing state of a car door and a floor door.

Optionally, in the above-described method, types of the safety event include one or more of: a power failure, a sensor failure, a door system failure, a mechanical component failure, and an abnormal mode of operation of the elevator system.

Optionally, in the above-described method, the state values of the first category of features and the state values of the second category of features are represented in a form of a One-Hot Encoding, and each component of the feature vector is represented in a form of a binary value.

Optionally, in the above-described method, in the step of generating the assessment result regarding the safety risk, a level of the safety risk is determined from the probability based on a preset mapping relationship, wherein the mapping relationship defines a range of values of the probability corresponding to each level.

Optionally, the above-described method is implemented by one of: a cloud computing device, a control system for controlling a plurality of elevator systems, and a controller in the elevator system.

In accordance with another aspect of the present application, there is provided a device for determining a safety risk of an elevator system. The device includes at least one processor, at least one memory, and a computer program stored on the memory. The computer program when run on the processor will result in the following operations: generating a feature vector based at least on operational state data of the elevator system, and subsequently determining a probability of a transport object being trapped in a car of the elevator system using a neural network model. The feature vector and the probability are an input variable and an output variable of the neural network model, respectively, and the feature vector comprises components corresponding to combinations selected from a plurality of state values of a first category of features, wherein the state values of the first category of features are determined based on the operational state data.

In accordance with a further aspect of the present application, there is provided a computer-readable storage medium on which a computer program suitable for running on a processor of a terminal device is stored, the running of the computer program resulting in the steps of the method as described above being performed.

### DESCRIPTION OF THE DRAWINGS

The above and/or other aspects and advantages of the present application will be clearer and more easily understood from the following description of various aspects in conjunction with the accompanying drawings, in which the same or similar units are denoted by the same reference numerals. The accompanying drawings include:
FIG. 1 is a view of an exemplary elevator system.
FIG. 2 is a flowchart of a method for determining a safety risk of an elevator system in accordance with an embodiment of the present application.
FIG. 3 is a schematic diagram of an exemplary neural network model.
FIG. 4 is a flowchart of a method for determining a safety risk of an elevator system in accordance with another embodiment of the present application.
FIG. 5 is a flowchart of a method for determining a safety risk of an elevator system in accordance with another embodiment of the present application.
FIG. 6 is a schematic block diagram of a device for determining a safety risk of an elevator system in accordance with another embodiment of the present application.

### DETAILED DESCRIPTION

The present application is described more fully below with reference to the accompanying drawings, in which illustrative embodiments of the application are illustrated. However, the present application may be implemented in different forms and should not be construed as limited to the embodiments presented herein. The presented embodiments are intended to make the disclosure herein comprehensive and complete, so as to more comprehensively convey the protection scope of the application to those skilled in the art.

In this specification, terms such as "comprising" and "including" mean that in addition to units and steps that are directly and clearly stated in the specification and claims, the technical solution of the application does not exclude the presence of other units and steps that are not directly or clearly stated in the specification and claims.

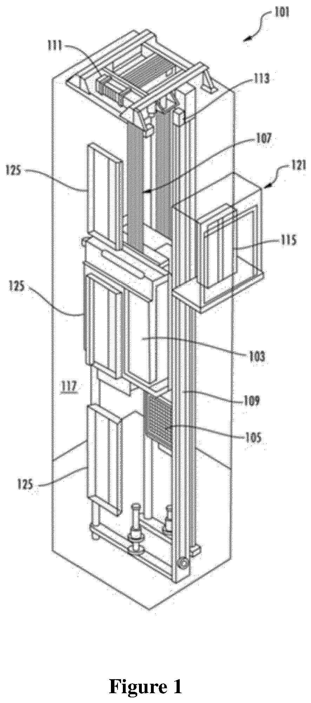

FIG. 1 is a view of an exemplary elevator system. An elevator system 101 shown in FIG. 1 includes an elevator car 103, a counterweight 105, a tensioning component 107, a guide rail (or rail system) 109, a unit (or unit system) 111, a position reference system 113, and an electronic elevator controller (controller) 115. The elevator car 103 and the counterweight 105 may be connected to each other via the tensioning component 107. The tensioning component 107 may include or be configured as, for example, a rope, a steel cable, and/or a coated steel strip. The counterweight 105 is configured to balance a load of the elevator car 103 and is configured to assist in moving the elevator car 103 within an elevator shaft (or shaft) 117 and along the guide rail 109 in opposite directions relative to the counterweight 105 simultaneously.

The tensioning component 107 may engage the unit 111, the unit 111 may be part of a header structure of the elevator system 101. The unit 111 is configured to control movement between the elevator car 103 and the counterweight 105. The position reference system 113 may be mounted on a fixed portion at the top of the elevator shaft 117, such as on a support member or guide rail, and may be configured to provide a position signal related to the position of the elevator car 103 within the elevator shaft 117. In other embodiments, the position reference system 113 may be mounted directly to a moving assembly of the unit 111, or may be located in other locations and/or configurations as known in the art. The position reference system 113 may be any device or mechanism for monitoring the position of the elevator car and/or the counterweight as is known in the art. As may be appreciated by those skilled in the art, the position reference system 113 includes, for example, but is not limited to, an encoder, a sensor, or other systems, and may implement various sensing such as velocity sensing, absolute position sensing, and the like.

As shown, the controller 115 is located in a controller compartment 121 of the elevator shaft 117 and is configured to control operation of the elevator system 101 (and in particular, the elevator car 103). For example, the controller 115 may provide a drive signal to the unit 111 to control acceleration, deceleration, leveling, stopping, and the like of the elevator car 103. The controller 115 may also be configured to receive the position signal from the position reference system 113 or any other desired position reference device. While moving up or down along the guide rail 109 within the elevator shaft 117, the elevator car 103 may stop at one or more landing stations 125 as controlled by the controller 115. Although shown in the controller compartment 121, those skilled in the art will appreciate that the controller 115 may be located and/or configured at other places or locations within the elevator system 101. In an embodiment, the controller may be remotely located or located in a cloud.

The unit 111 may include a motor or similar drive mechanism. According to embodiments of the present application, the unit 111 is configured to include an electrically driven motor. A power source for the motor may be any power source, including a power grid, the power source being supplied to the motor in combination with other components. The unit 111 may include a traction pulley, the traction pulley transmitting force to the tensioning component 107 to move the elevator car 103 within the elevator shaft 117.

In this specification, the operational state data of the elevator system refers to parameters or state values used to describe the operational or working status of various components or units, such as the various units of the elevator system shown in FIG. 1 above. In some embodiments of the present application, the types of operational states include, for example, but are not limited to, an elevator system operational mode, a car movement direction, a floor on which the car is located, a car level alignment state, a traction machine movement state, opening and closing state of a car door and a floor door.

In this specification, a transport object refers to an object transported by the elevator system, which includes, for example, a person, an animal, and an equipment.

In this specification, being trapped in a car or a trapped event refers to an event in which the transport object is unable to leave the car and intervention measures are required. As for the type of intervention measures to be taken, it may be defined by the user according to the application requirements. In some examples, the intervention measures may be defined, for example, as dispatching personnel to the scene to perform a rescue.

It should be noted that in the present application, the inability of the transport object to leave the car does not necessarily mean that it is in a state of distress or that a distress event must have occurred. For example, when the car moves between two floors, the car door and landing door will be automatically prohibited from opening, but at that time the elevator system is still in normal operation, so the event is not a distress event; or, for example, although the car door cannot be opened when the car is parked on a floor, the event may not be regarded as a distress event if the malfunction may be eliminated by the elevator system maintenance personnel through remote control.

In this specification, a safety event refers to an event in the operation of the elevator system that has a correlation with a distress event, which includes, for example, but is not limited to, one or more of the following types: a power failure of the elevator system, a sensor failure, a door system failure, a mechanical component failure, and an abnormal mode of operation of the elevator system.

Generally speaking, the occurrence of a trapped event is inevitably reflected in the operational state data or safety events of the elevator system. However, due to the numerous factors that lead to the trapped event and the complex coupling relationships that may exist between these factors, it will become very difficult to identify the trapped event or determine the probability of the occurrence of the trapped event based directly on the operational state data or safety events. In some embodiments of the present application, a neural network model is utilized to establish a correlation or mapping relationship between the operational state data and the probability of the occurrence of the trapped event. In particular, in some embodiments, the components of the feature vector input into the neural network model used are combinations of category of features (hereinafter also referred to as a first category of features) originating from the operational state data. In other embodiments, in addition to combinations of category of features originating from the operational state data (e.g., a combination of multiple types of the operational state data), the components of the feature vector may also be combinations of the first category of features with category of features originating from the safety event (hereinafter also referred to as a second category of features). Further description regarding the form and generation of the first category of features and the second category of features, etc., will be provided below.

In some embodiments of the present application, by utilizing the combinations of the first category of features originating from the operational state data instead of directly utilizing the operational state data to construct the components of the feature vector, the operational state data having a strong correlation with the trapped event can be "aggregated" together, making the correlation between the operational state data and the trapped event more explicit and providing more interpretability for the output results of the neural network model. In other embodiments of the present application, the above technical effect is further enhanced by introducing the second category of features originating from the safety event when constructing the components of the feature vector.

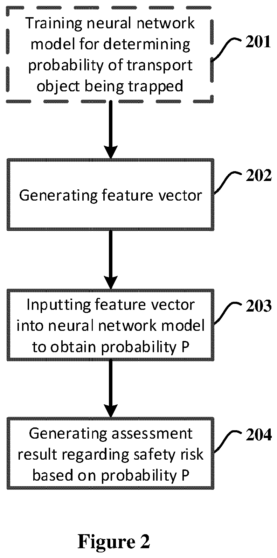

FIG. 2 is a flowchart of a method for determining a safety risk of an elevator system in accordance with an embodiment of the present application. The method described below may be implemented by various devices that include, for example, but are not limited to, a cloud computing device (e.g., a cluster of cloud servers), a control system for controlling a plurality of elevator systems, and a controller in the elevator system, etc., which are hereinafter collectively referred to as a device for determining a safety risk of an elevator system or safety risk determination device.

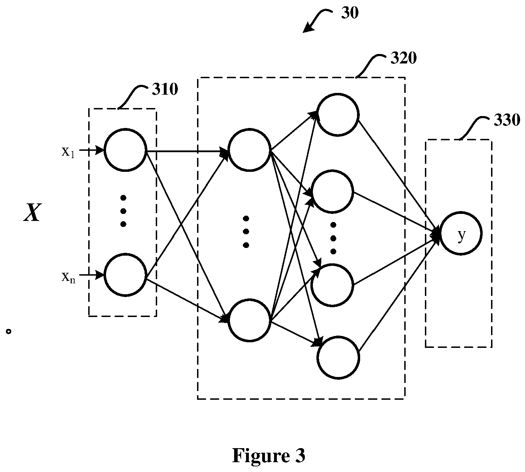

The method shown in FIG. 2 begins at step 201. in which the safety risk determination device trains a neural network model for determining a probability of a transport object being trapped. FIG. 3 is a schematic diagram of an exemplary neural network model that may be used to determine a probability P of a transport object being trapped. As shown in FIG. 3, a neural network model 30 comprises an input layer 310, a hidden layer 320, and an output layer 330. The input layer 310 comprises a plurality of input nodes 310-1 to 310-n. The number of the hidden layer 320 may be one layer or a plurality of layers. The output layer 330 comprises output nodes y, the output result of which may be used as a probability P of a transport object being trapped.

The operating logs of the elevator system usually contain rich fault information and maintenance operation information (e.g., the type of fault of the elevator system and the corresponding maintenance operation record), and thus various operational state data may be labeled by log data to obtain a training sample set and a test sample set for use in the neural network model. By reusing the operating logs, not only does it reduce the training cost of the neural network model, but it also helps to improve the quality of training samples.

It is noted that in the method shown in FIG. 2, step 201 is an optional step. For example, when the neural network model for determining a probability of a transport object being trapped is available by other means (e.g., commercially purchased), step 201 will no longer be necessary.

Continuing to refer to FIG. 2, in step 202, the safety risk determination device generates a feature vector X or [χ1,χ2...χn]. Further description of the manner in which the feature vector is generated will be provided below.

Subsequently proceeding to step 203, the safety risk determination device inputs the feature vector X into the neural network model to obtain, as an output variable of the model, or a probability P of a transport object being trapped in a car of the elevator system. Exemplarily, each component χi (i=1...n) of the feature vector [χ1,χ2...χn] is input into a corresponding one of the plurality of input nodes 310-1 to 310-n. In some specific implementations, each component of the feature vector is represented in a form of a binary value, and the neural network model may be a classifier model whose output classification results include '1' (e.g., indicating that the elevator system has a trapped event) or '0' (e.g. indicating that the elevator system has no trapped event).

After completing step 203, the process shown in FIG. 2 proceeds to step 204. In step 204, the safety risk determination device generates an assessment result regarding the safety risk of the elevator system based on the probability P obtained in step 203. In some specific implementations, a range of values of the probability P may be divided into a plurality of intervals, each interval of values corresponding to a level of one of the safety risks, thereby obtaining a mapping relationship between the interval of values of the probability and the level of the safety risk. In one example, the range of values of the probability P is [0,1], which is divided into three intervals of [0,0.3), [0.3,0.6), and [0.6,1], which correspond to the levels of low risk, medium risk, and high risk, respectively. In another example, the probabilities P are discrete values of 1 and 0, which correspond to the occurrence of the trapped event and the non-occurrence of the trapped event, respectively.

Accordingly, in step 204, the safety risk determination device may determine a corresponding level of safety risk from the probability P obtained in step 203 based on the mapping relationship described above.

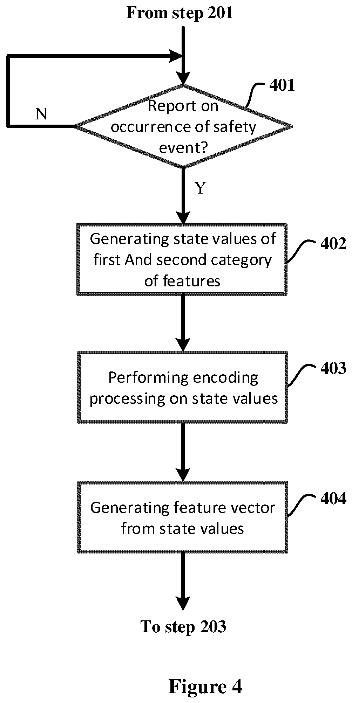

FIG. 4 is a flowchart of a method for determining a safety risk of an elevator system in accordance with another embodiment of the present application. In this embodiment, it is assumed that the safety risk determination device is a cloud computing device or a control system for controlling a plurality of elevator systems. The implementation of step 202 in FIG. 2 is described further below with the aid of FIG. 4.

The process shown in FIG. 4 begins at step 401, which may, for example, follow step 201 in FIG. 2. In step 401, the safety risk determination device determines whether a report FAILURE_REPORT is received from a gateway connected to the elevator system regarding the occurrence of the safety event. If the report FAILURE_REPORT is received, it proceeds to step 402, otherwise, it continues to monitor whether the report FAILURE_REPORT is received from the gateway.

In some specific implementations, in response to the occurrence of the safety event (e.g., the various types of safety events described above), the controller of the elevator system sends to the cloud, via the gateway, the report FAILURE_REPORT regarding the occurrence of the safety event and operational state data DATA of the elevator system associated with the safety event. As described above, the operational state data may describe the elevator system's multiple types of operational states. In some specific implementations, the operational state data DATA contains data samples S₁ to Sₘ for m (m≥1) moments, each of which may contain a state value of multiple types of operational states at one of the moments, which may be represented, for example, in the following form:

| [True | A | d | 01 | NOR | ST | ><][ | DZ | 1LV | 2LV | 1668651867] |
|---|---|---|---|---|---|---|---|---|---|---|
| 1 | 2 | 3 | 4 | 5 | 6 | 7 | 8 | 9 | 10 | 11 |

As shown in the above representation, each data sample contains multiple fields (individual strings separated by spaces within a square bracket, with the number below each string representing the number of the corresponding field), the meanings of which are shown in Table 1:

**Table 1**

| **Field number** | **Examples of values** | **Usage** |
|---|---|---|
| 1 | True/False | Indicate data integrity |
| 2 | A/B/C/D | Define the connection between the gateway and the elevator system |
| 3 | u/U/d/D | Car movement direction |
| 4 | Floor Number | Car |
| 5 | NOR/NAV/IDL/COR | Operational mode |
| 6 | FR/SR/ST/ID | Traction machine movement state |
| 7 | "<>><"/"><]["/"><<>"/"><><"/"><DD" | Car state |
| 8-10 | DZ 1LV 2LV/dz 11v 21v | Car level alignment state |
| 11 | 1668651867 | Time stamp |

In step 402, the safety risk determination device generates the state values of the first category of features from the received operational state data DATA and generates the state values of the second category of features from the safety event. The first category of features and the second category of features are typically variables that change over time, and the values of these variables at a certain moment are hereinafter referred to as state values or current instances. Exemplarily, the first category of features of k (k≥2) categories is denoted as {F₁(j)} (j=1...k) and the second category of features is denoted as F₂. It is noted that although the second category of features has one category in the above example, this is only exemplary and the number of categories of the second category of features also may be more than one.

Table 2 illustrates an example of the categories of the first category of features and the second category of features, wherein the first row indicates the categories of the category of features, and "..." in the column corresponding to each category of features indicates a value that may be taken for that category of features.

**Table 2**

| Opmode | Event | Pre_Opmode | Last_Opmode | Motion_Before_Change | DoorZone | floor |
|---|---|---|---|---|---|---|
| ••• | ••• | ••• | ••• | ••• | ••• | ••• |
| ••• | ••• | ••• | ••• | ••• | ••• | ••• |
| ••• | ••• | ••• | ••• | ••• | ••• | ••• |
| ••• | ••• | ••• | ••• | ••• | ••• | ••• |

In Table 2, the Event-column indicates the types of safety events, the Opmode-column indicates the possible abnormal operational modes of the elevator system at the time of various types of safety events (hereinafter denoted as the moment t₀), the Pre_Opmode-column indicates the possible operational modes of the elevator system at a certain moment before the occurrence of various types of safety events (such as a moment (t₀-Δ_{P}), where Δ_{P} is the preset time interval), the Last_Opmode-column indicates the possible operational modes of the elevator system at a certain moment after the occurrence of various types of safety events (such as a moment (t₀+Δ_{L}), where Δ_{L} is the preset time interval), the Motion_Before_Change-column indicates traction machine movement states at a certain moment before the occurrence of various types of safety events (such as a moment (t₀-Δ_{M}), where Δ_{M} is the preset time interval), the DoorZone-column indicates car level alignment states at the time of various types of safety events, and the floor-column indicates the floors on which the car is located at the time of various types of safety events.

Table 3 illustrates examples of state values or current instances {F₁(j)} (j=1...k), F₂, for the first category of features and the second category of features, wherein the state values may be determined from the operational state data DATA and the safety events. Specifically, the state values of the first category of features Opmode, Pre_Opmode, Last_Opmode, Motion_Before_Change, DoorZone, open_time, and floor may be determined from the operational state data DATA. The state values of the category of features Opmode, Pre_Opmode, and Last_Opmode may be determined, for example, from fields 5 and 11 in the data samples S₁ to Sₘ, the state value of the category of features Motion_Before_Change may be determined from fields 6 and 11, and the state value of the category of features DoorZone may be determined from fields 8-11. On the other hand, the state value of the second category of features Event in Table 3 may be determined based on the type of safety event in the report FAILURE_REPORT.

In Table 3, "NAV" indicates that the elevator system is in an operational mode where the cause of the stoppage is unknown, "INS" indicates that the elevator system is in an operational mode where maintenance is performed, and "NOR" indicates that the elevator system is in normal operational mode.

**Table 3**

| Opmode | Event | Pre_Opmode | Last_Opmode | Motion_Before_Change | DoorZone | floor |
|---|---|---|---|---|---|---|
| NAV | 0218 | INS | NOR | SR | 0 | 18 |

After completing step 402, the process shown in FIG. 4 proceeds to step 403. In step 403, the safety risk determination device performs encoding processing on the state values or current instances {F₁(j)} (j=1...k), F₂, for the first category of features and the second category of features. In some specific implementations, a One-Hot Encoding is used to convert each of the state values of the first category of features and the second category of features into a corresponding vector. For example, for the category of features with three states or fetchable values (assumed to be state A, state B, and state C), One-Hot Encoding would create three new columns for the three states, with the first column taking the value '1' and the second and third columns taking the values '0' if the state of the current instance of the category of features is A, with the first and third columns taking the value '0' and the second column taking the value '1' if the state of the current instance of the category of features is B, and with the first and second columns taking the value '0' and the third column taking the value '1' if the state of the current instance of the category of features is C. Thus, each state of the category of features will be represented as a binary vector.

Table 4 illustrates examples of the state values and corresponding encoded values of the first category of features and the second category of features, wherein the first row represents the state value of the category of features and the subsequent rows represent a vectorized representation of the state value, i.e., the numbers in column of each category of features form the respective components of the corresponding vector.

**Table 4**

| Opmode_NAV | Event_0218 | Pre_NOR | Last_INS | Motion_Before_Change_ID | DoorZone | floor |
|---|---|---|---|---|---|---|
| 0 | 1 | 1 | 0 | 1 | 1 | 0 |
| 1 | 0 | 1 | 0 | 0 | 0 | 1 |
| ... | ... | ... | ... | ... | ... | ... |

It should be noted that the encoding process actually converts the variables of the category of features into a format that is easily processed by some machine learning algorithms, so whether or not the encoding process is performed depends on the neural network model or machine learning algorithm employed. That is, in the method shown in FIG. 4, step 403 is an optional step.

After completing step 403, the process shown in FIG. 4 proceeds to step 404. In step 404, the safety risk determination device generates a feature vector (e.g., a feature vector [χ1,χ2...χn]) from the state values {F₁(j)} (j=1...k) of the first category of features and the state values F₂ of the second category of features.

Various combinations of the state values of the first category of features may be constructed by selecting one or more state values from the state values {F₁(j)} (j=1...k) of the first category of features. In some specific implementations, the component χᵢ (i=1...n) of the feature vector takes a value that may correspond to one of the various combinations constructed from the state values of the first category of features. Specifically, for the component χᵢ with m (m≥2) fetchable values, a corresponding combination of state values may be defined for each fetchable value.

Furthermore, various combinations comprising the state values of the first category of features and the state values of the second category of features may be constructed by selecting one or more state values from the state values {F₁(j)} (j=1...k) of the first category of features and adding the state values F₂ of the second category of features. In other specific implementations, the component χᵢ of the feature vector takes a value that may also correspond to one of the various combinations comprising the first category of features and the second category of features, i.e., a corresponding combination of state values is defined for each of the fetchable values of the component χᵢ.

In the selection of the combinations of the state values, it may be considered to include in the combinations the state values of the category of features (e.g., Opmode, Pre_Opmode, and Last_Opmode) belonging to the same type of operational state and having a temporal sequential relationship. In an example, assuming that the component χᵢ comprises two values '1' and '0' and that the change in the operational mode of the elevator system over time has a correlation with the identity of the person entering the car (a regular passenger or a maintenance person), it may be considered to determine the value of the component χᵢ based on a combination of the state values of the first category of features Opmode and Pre_Opmode. For example, when any one of the following combinations of multiple state values occurs, the value of the component χᵢ will be determined to be '1' (which indicates a high probability of a maintenance person being present in the car), otherwise the value of the component χᵢ will be determined to be '0' (which indicates a low probability of a maintenance person being present in the car):
Combination-1: the state value of Opmode is "NAV" and the state value of Pre_Opmode is "INS";
Combination-2: the state value of Opmode is "HAD" (which indicates that the elevator system is in an operational mode of shaft entry and exit detection) and the state value of Pre_Opmode is "INS"; and
Combination-3: the state value of Opmode is "HAD" and the state value of Pre_Opmode is "EBS" (which indicates that the elevator system is in an operational mode where the emergency stop button is pressed).

In another example, assuming that the component χi+1 comprises two values '1' and '0' and that the change in the operational mode of the elevator system over time has a correlation with whether the person in the car have the ability to self rescue, it may be considered to determine the value of the component χi+1 based on a combination of the state values of the first category of features Opmode and Last_Opmode. For example, when the following combination of state values occurs, the value of the component χi+1 will be determined to be '1' (which indicates a high probability of door jamming), otherwise the value of the component χi+1 will be determined to be '0' (which indicates a low probability of door jamming): the state value of Opmode is "NOR" and the state value of Last_Opmode is "DTO" (which indicates that the elevator system is in an operational mode of door opening timeout protection).

It should be noted that in step 404, the feature vector may be generated based on the state values {F₁(j)} (j=1...k) of the first category of features, or the feature vector may be generated based on both the state values {F₁(j)} (j=1...k) of the first category of features and the state values F₂ of the second category of features.

After completing step 404, the process shown in FIG. 4 moves to step 203 in FIG. 2.

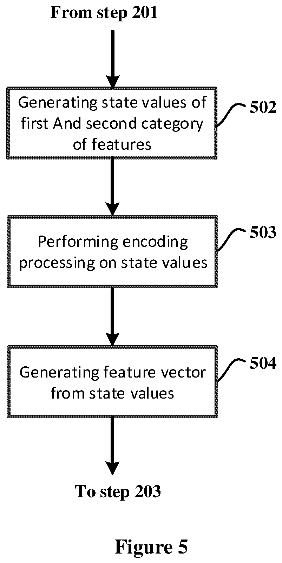

FIG. 5 is a flowchart of a method for determining a safety risk of an elevator system in accordance with another embodiment of the present application. In this embodiment, it is assumed that the safety risk determination device is a controller in the elevator system, that is, in the method shown in FIG. 5, the safety risk is determined locally. The method shown in FIG. 5 may likewise implement step 202 of FIG. 2. To avoid redundancy, the following describes primarily the differences between the embodiment shown in FIG. 5 and the embodiment shown in FIG. 4.

The process shown in FIG. 5 begins at step 501, which may, for example, follow step 201 in FIG. 2. In step 501, the safety risk determination device generates the state values of the first category of features from the operational state data DATA, and also generates the state values of the second category of features based on the safety event when the safety event occurs. In other implementations of the embodiment shown in FIG. 5, the safety risk determination device may generate the state values of the first category of features based on the operational state data DATA in response to the occurrence of the safety event and generate the state values of the second category of features based on the safety event. In the embodiment shown in FIG. 5, the first category of features and the second category of features may have various characteristics as described above, which are not repeated herein.

After completing step 501, the process shown in FIG. 5 proceeds to step 503. In step 503, the safety risk determination device performs encoding processing on the state values or current instances {F₁(j)} (j=1...k), F₂, for the first category of features and the second category of features. Similar to the embodiment shown in FIG. 4, a One-Hot Encoding may also be used to convert each of the state values of the first category of features and the second category of features into a corresponding vector.

Subsequently, the process shown in FIG. 5 proceeds to step 504. In step 504, the safety risk determination device generates a feature vector (e.g., a feature vector [χ1,χ2...χn]) from the state values {F₁(j)} (j=1...k) of the first category of features and the state values F₂ of the second category of features.

After completing step 504, the process shown in FIG. 5 moves to step 203 in FIG. 2.

Specific implementations of steps 502 and 503 are described above and will not be repeated herein.

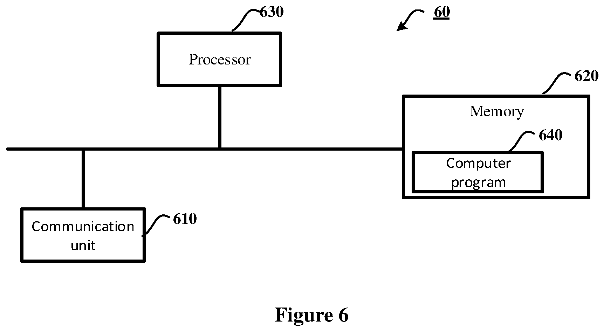

FIG. 6 is a schematic block diagram of a device for determining a safety risk of an elevator system in accordance with another embodiment of the present application. The device shown in FIG. 6 may be one of a cloud computing device, a control system for controlling a plurality of elevator systems, and a controller in the elevator system.

As shown in FIG. 6, a device 60 comprises a communication unit 610, one or more memory 620 (e.g., non-volatile memories such as flash memory, ROM, hard drives, disks, CD-ROMs, and the like), one or more processor 630, and a computer program 640.

The communication unit 610 serves as a communication interface configured to establish a communication connection between the device 60 and an external device (e.g., various sensors of the elevator system, etc.) or a network (e.g., the Internet and a wireless LAN, etc.).

The memory 620 stores the computer program 640 that may be executed by the processor 630. In addition, the memory 620 may store data generated by the processor 630 in executing the computer program 640 and data received from the external device (e.g., operational state data of the elevator system, etc.) via the communication unit 610.

The processor 630 is configured to run the computer program 640 stored on the memory 620 and perform access operations to the memory 620.

The computer program 640 may include computer instructions for implementing the methods described with the aid of FIGS. 2-5, enabling implementation of the corresponding methods when the computer program 640 is run on the processor 630.

Those skilled in the art will appreciate that various illustrative logical blocks, modules, circuits, and algorithm steps described herein may be implemented as electronic hardware, computer software, or combinations of both.

To demonstrate this interchangeability between the hardware and software, various illustrative components, blocks, modules, circuits, and steps have been described above generally in terms of their functionality. Whether such functionality is implemented in hardware or software depends on the particular application and design constraints imposed on the overall system. Those skilled in the art may implement the described functionality in changing ways for the particular application. The scope of the present application is defined by the appended claims.

Although only a few of the specific embodiments of the present application have been described, those skilled in the art will appreciate that the present application may be embodied in many other forms. Accordingly, the examples and implementations shown are to be regarded as illustrative and not restrictive, and various modifications and substitutions may be covered by the application.

The embodiments and examples presented herein are provided to best illustrate embodiments in accordance with the present technology and its particular application, and to thereby enable those skilled in the art to implement and use the present application. However, those skilled in the art will appreciate that the above description and examples are provided for convenience of illustration and example only. The presented description is not intended to cover every aspect of the application or to limit the application to the precise form disclosed.

## Claims

1. A method for determining a safety risk of an elevator system, comprising:
A. generating a feature vector based at least on operational state data of the elevator system, wherein the feature vector comprises a component corresponding to a combination selected from a plurality of state values of a first category of features, the state values of the first category of features are determined based on the operational state data; and
B. determining a probability of a transport object being trapped in a car of the elevator system using a neural network model, wherein the feature vector and the probability are an input variable and an output variable of the neural network model, respectively,
wherein in step A, the feature vector is generated further based on a safety event, the feature vector further comprises components corresponding to combinations of the state values of the first category of features and state values of a second category of features, and the state values of the second category of features are determined based on the safety event,
**characterized in that**
the operational state data describes a plurality of types of operational states of the elevator system, and wherein each state value of the first category of features comprises one of the following state values of one of the types of operational states: i) a state value before occurrence of the safety event; ii) a state value at the time of the occurrence of the safety event; and iii) a state value after the occurrence of the safety event.

2. The method of claim 1, wherein further comprising:
C. generating an assessment result regarding the safety risk based on the probability, or
D. training the neural network model, wherein operating logs of the elevator system are utilized to label training samples for training the neural network model.

3. The method of claim 1, wherein each component of the feature vector corresponds to one of: i) a combination of the state values of the first category of features; ii) a combination of the state values of the first category of features and the state values of the second category of features.

4. The method of claim 3, wherein step A comprises:
A1. generating the plurality of state values of the first category of features from the operational state data and generating the state values of the second category of features from the safety event; and
A2. generating the feature vector from the state values of the first category of features and the state values of the second category of features.

5. The method of claim 1, wherein step A is performed in response to occurrence of the safety event, or wherein types of the safety event include one or more of: a power failure, a sensor failure, a door system failure, a mechanical component failure, and an abnormal mode of operation of the elevator system.

6. The method of claim 1, wherein the types of operational states include one or more of: an elevator system operational mode, a car movement direction, a floor on which the car is located, a car level alignment state, a traction machine movement state, opening and closing state of a car door and a floor door, or
wherein the state values of the first category of features and the state values of the second category of features are represented in a form of a One-Hot Encoding, and each component of the feature vector is represented in a form of a binary value.

7. The method of claim 1, wherein step C comprises determining a level of the safety risk from the probability based on a preset mapping relationship, wherein the mapping relationship defines a range of values of the probability corresponding to each level, or wherein the method is implemented by one of: a cloud computing device, a control system for controlling a plurality of elevator systems, and a controller in the elevator system.

8. A device for determining a safety risk of an elevator system, comprising:
at least one processor (630);
at least one memory (620); and
a computer program (640) stored on the memory which when run on the processor results in the following operations:
A. generating a feature vector based at least on operational state data of the elevator system, wherein the feature vector comprises a component corresponding to a combination selected from a plurality of state values of a first category of features, the state values of the first category of features are determined based on the operational state data; and
B. determining a probability of a transport object being trapped in a car of the elevator system using a neural network model, wherein the feature vector and the probability are an input variable and an output variable of the neural network model, respectively,
wherein in operation A, the feature vector is generated further based on a safety event, the feature vector further comprises components corresponding to combinations of the state values of the first category of features and state values of a second category of features, and the state values of the second category of features are determined based on the safety event,
**characterized in that**
the operational state data describes a plurality of types of operational states of the elevator system, and wherein each state value of the first category of features comprises one of the following state values of one of the types of operational states: i) a state value before occurrence of the safety event; ii) a state value at the time of the occurrence of the safety event; and iii) a state value after the occurrence of the safety event.

9. The device for determining the safety risk of the elevator system of claim 8, wherein the computer program which when run on the processor further results in the following operation:
C. generating an assessment result regarding the safety risk based on the probability, or
D. training the neural network model, wherein operating logs of the elevator system are utilized to label training samples for training the neural network model.

10. The device for determining the safety risk of the elevator system of claim 8, wherein each component of the feature vector corresponds to one of: i) a combination of the state values of the first category of features; ii) a combination of the state values of the first category of features and the state values of the second category of features.

11. The device for determining the safety risk of the elevator system of claim 10, wherein operation A comprises:
A1. generating the plurality of state values of the first category of features from the operational state data and generating the state values of the second category of features from the safety event; and
A2. generating the feature vector from the state values of the first category of features and the state values of the second category of features.

12. The device for determining the safety risk of the elevator system of claim 8, wherein the computer program which when run on the processor causes operation A to be performed in response to occurrence of the safety event, or wherein the state values of the first category of features and the state values of the second category of features are represented in a form of a One-Hot Encoding, and each component of the feature vector is represented in a form of a binary value.

13. The device for determining the safety risk of the elevator system of claim 8, wherein the types of operational states include one or more of: an elevator system operational mode, a car movement direction, a floor on which the car is located, a car level alignment state, a traction machine movement state, opening and closing state of a car door and a floor door, or wherein types of the safety event include one or more of: a power failure, a sensor failure, a door system failure, a mechanical component failure, and an abnormal mode of operation of the elevator system.

14. The device for determining the safety risk of the elevator system of claim 8, wherein operation C comprises determining a level of the safety risk from the probability based on a preset mapping relationship, wherein the mapping relationship defines a range of values of the probability corresponding to each level, or wherein the device for determining the safety risk of the elevator system is one of the following: a cloud computing device, a control system for controlling a plurality of elevator systems, and a controller in the elevator system.

15. A non-transitory computer-readable storage medium, the computer-readable storage medium having instructions stored therein, **characterized in that** the method of any one of claims 1-7 is implemented by executing the instructions by a processor.

## Patentansprüche

1. Verfahren zur Bestimmung eines Sicherheitsrisikos eines Aufzugssystems, umfassend:
A. Erzeugen eines Merkmalsvektors, der mindestens auf Betriebszustandsdaten des Aufzugssystems basiert, wobei der Merkmalsvektor eine Komponente umfasst, die einer Kombination entspricht, die aus einer Mehrzahl von Zustandswerten einer ersten Merkmalskategorie ausgewählt ist, wobei die Zustandswerte der ersten Merkmalskategorie auf der Grundlage der Betriebszustandsdaten bestimmt werden; und
B. Bestimmen einer Wahrscheinlichkeit, dass ein Transportobjekt in einer Kabine des Aufzugssystems eingeklemmt wird, unter Verwendung eines neuronalen Netzwerkmodells, wobei der Merkmalsvektor und die Wahrscheinlichkeit eine Eingabevariable bzw. eine Ausgabevariable des neuronalen Netzwerkmodells sind,
wobei in Schritt A der Merkmalsvektor ferner auf der Grundlage eines Sicherheitsereignisses erzeugt wird, wobei der Merkmalsvektor ferner Komponenten umfasst, die Kombinationen der Zustandswerte der ersten Merkmalskategorie und der Zustandswerte einer zweiten Merkmalskategorie entsprechen, und wobei die Zustandswerte der zweiten Merkmalskategorie auf der Grundlage des Sicherheitsereignisses bestimmt werden,
**dadurch gekennzeichnet, dass**
die Betriebszustandsdaten eine Mehrzahl von Arten von Betriebszuständen des Aufzugssystems beschreiben, und wobei jeder Zustandswert der ersten Merkmalskategorie einen der folgenden Zustandswerte einer der Arten von Betriebszuständen umfasst: i) einen Zustandswert vor dem Eintreten des Sicherheitsereignisses; ii) einen Zustandswert zum Zeitpunkt des Eintretens des Sicherheitsereignisses; und iii) einen Zustandswert nach dem Eintreten des Sicherheitsereignisses.

2. Verfahren nach Anspruch 1, wobei ferner umfassend:
C. Erzeugen eines Bewertungsergebnisses hinsichtlich des Sicherheitsrisikos auf der Grundlage der Wahrscheinlichkeit, oder
D. Trainieren des neuronalen Netzwerkmodells, wobei Betriebsprotokolle des Aufzugssystems verwendet werden, um Trainingsbeispiele für das Trainieren des neuronalen Netzwerkmodells zu kennzeichnen.

3. Verfahren nach Anspruch 1, wobei jede Komponente des Merkmalsvektors einer der folgenden Kombinationen entspricht: i) einer Kombination der Zustandswerte der ersten Merkmalskategorie; ii) einer Kombination der Zustandswerte der ersten Merkmalskategorie und der Zustandswerte der zweiten Merkmalskategorie.

4. Verfahren nach Anspruch 3, wobei Schritt A Folgendes umfasst:
A1. Erzeugen der Mehrzahl von Zustandswerten der ersten Merkmalskategorie aus den Betriebszustandsdaten und Erzeugen der Zustandswerte der zweiten Merkmalskategorie aus dem Sicherheitsereignis; und
A2. Erzeugen des Merkmalsvektors aus den Zustandswerten der ersten Merkmalskategorie und den Zustandswerten der zweiten Merkmalskategorie.

5. Verfahren nach Anspruch 1, wobei Schritt A als Reaktion auf das Auftreten des Sicherheitsereignisses durchgeführt wird, oder wobei die Arten des Sicherheitsereignisses eines oder mehrere der Folgenden umfassen: einen Stromausfall, einen Sensorausfall, einen Ausfall des Türsystems, einen Ausfall einer mechanischen Komponente und einen anormalen Betriebsmodus des Aufzugssystems.

6. Verfahren nach Anspruch 1, wobei die Arten von Betriebszuständen eine oder mehrere der Folgenden umfassen:
einen Betriebsmodus des Aufzugssystems, eine Bewegungsrichtung der Kabine, ein Stockwerk, auf dem sich die Kabine befindet, einen Ausrichtungszustand der Kabine, einen Bewegungszustand der Antriebsmaschine, einen Öffnungs- und Schließzustand einer Kabinentür und einer Stockwerkstür, oder
wobei die Zustandswerte der ersten Merkmalskategorie und die Zustandswerte der zweiten Merkmalskategorie in Form einer One-Hot-Codierung dargestellt werden und jede Komponente des Merkmalsvektors in Form eines Binärwerts dargestellt wird.

7. Verfahren nach Anspruch 1, wobei Schritt C Bestimmen eines Sicherheitsrisikoniveaus aus der Wahrscheinlichkeit auf der Grundlage einer voreingestellten Zuordnungsbeziehung umfasst, wobei die Zuordnungsbeziehung einen Wertebereich der Wahrscheinlichkeit definiert, der jedem Niveau entspricht, oder wobei das Verfahren durch eines der folgenden Elemente implementiert wird: eine Cloud-Rechenvorrichtung, ein Steuerungssystem zur Steuerung einer Mehrzahl von Aufzugssystemen und eine Steuerung im Aufzugssystem.

8. Vorrichtung zur Bestimmung eines Sicherheitsrisikos eines Aufzugssystems, umfassend:
mindestens einen Prozessor (630);
mindestens einen Speicher (620); und
ein Computerprogramm (640), das im Speicher gespeichert ist und das bei Ausführung auf dem Prozessor die folgenden Vorgänge bewirkt:
A. Erzeugen eines Merkmalsvektors, der mindestens auf Betriebszustandsdaten des Aufzugssystems basiert, wobei der Merkmalsvektor eine Komponente umfasst, die einer Kombination entspricht, die aus einer Mehrzahl von Zustandswerten einer ersten Merkmalskategorie ausgewählt ist, wobei die Zustandswerte der ersten Merkmalskategorie auf der Grundlage der Betriebszustandsdaten bestimmt werden; und
B. Bestimmen einer Wahrscheinlichkeit, dass ein Transportobjekt in einer Kabine des Aufzugssystems eingeklemmt wird, unter Verwendung eines neuronalen Netzwerkmodells, wobei der Merkmalsvektor und die Wahrscheinlichkeit eine Eingabevariable bzw. eine Ausgabevariable des neuronalen Netzwerkmodells sind,
wobei bei Vorgang A der Merkmalsvektor ferner auf der Grundlage eines Sicherheitsereignisses erzeugt wird, wobei der Merkmalsvektor ferner Komponenten umfasst, die Kombinationen der Zustandswerte der ersten Merkmalskategorie und der Zustandswerte einer zweiten Merkmalskategorie entsprechen, und wobei die Zustandswerte der zweiten Merkmalskategorie auf der Grundlage des Sicherheitsereignisses bestimmt werden,
**dadurch gekennzeichnet, dass**
die Betriebszustandsdaten eine Mehrzahl von Arten von Betriebszuständen des Aufzugssystems beschreiben, und wobei jeder Zustandswert der ersten Merkmalskategorie einen der folgenden Zustandswerte einer der Arten von Betriebszuständen umfasst: i) einen Zustandswert vor dem Eintreten des Sicherheitsereignisses; ii) einen Zustandswert zum Zeitpunkt des Eintretens des Sicherheitsereignisses; und iii) einen Zustandswert nach dem Eintreten des Sicherheitsereignisses.

9. Vorrichtung zur Bestimmung des Sicherheitsrisikos des Aufzugssystems nach Anspruch 8, wobei das Computerprogramm, das bei Ausführung auf dem Prozessor ferner den folgenden Vorgang bewirkt:
C. Erzeugen eines Bewertungsergebnisses hinsichtlich des Sicherheitsrisikos auf der Grundlage der Wahrscheinlichkeit, oder
D. Trainieren des neuronalen Netzwerkmodells, wobei Betriebsprotokolle des Aufzugssystems verwendet werden, um Trainingsbeispiele für das Trainieren des neuronalen Netzwerkmodells zu kennzeichnen.

10. Vorrichtung zur Bestimmung des Sicherheitsrisikos des Aufzugssystems nach Anspruch 8, wobei jede Komponente des Merkmalsvektors einer der folgenden Kombinationen entspricht: i) einer Kombination der Zustandswerte der ersten Merkmalskategorie; ii) einer Kombination der Zustandswerte der ersten Merkmalskategorie und der Zustandswerte der zweiten Merkmalskategorie.

11. Vorrichtung zur Bestimmung des Sicherheitsrisikos des Aufzugssystems nach Anspruch 10, wobei Vorgang A Folgendes umfasst:
A1. Erzeugen der Mehrzahl von Zustandswerten der ersten Merkmalskategorie aus den Betriebszustandsdaten und Erzeugen der Zustandswerte der zweiten Merkmalskategorie aus dem Sicherheitsereignis; und
A2. Erzeugen des Merkmalsvektors aus den Zustandswerten der ersten Merkmalskategorie und den Zustandswerten der zweiten Merkmalskategorie.

12. Vorrichtung zur Bestimmung des Sicherheitsrisikos des Aufzugssystems nach Anspruch 8, wobei das Computerprogramm, das bei Ausführung auf dem Prozessor bewirkt, dass Vorgang A als Reaktion auf das Auftreten des Sicherheitsereignisses durchgeführt wird, oder wobei die Zustandswerte der ersten Merkmalskategorie und die Zustandswerte der zweiten Merkmalskategorie in Form einer One-Hot-Codierung dargestellt werden und jede Komponente des Merkmalsvektors in Form eines Binärwerts dargestellt wird.

13. Vorrichtung zur Bestimmung des Sicherheitsrisikos des Aufzugssystems nach Anspruch 8, wobei die Arten von Betriebszuständen eine oder mehrere der Folgenden umfassen: einen Betriebsmodus des Aufzugssystems, eine Bewegungsrichtung der Kabine, ein Stockwerk, auf dem sich die Kabine befindet, einen Ausrichtungszustand der Kabine, einen Bewegungszustand der Antriebsmaschine, einen Öffnungs- und Schließzustand einer Kabinentür und einer Stockwerkstür, oder wobei die Arten des Sicherheitsereignisses eine oder mehrere der Folgenden umfassen: einen Stromausfall, einen Sensorausfall, einen Ausfall des Türsystems, einen Ausfall einer mechanischen Komponente und einen anormalen Betriebsmodus des Aufzugssystems.

14. Vorrichtung zur Bestimmung des Sicherheitsrisikos des Aufzugssystems nach Anspruch 8, wobei Vorgang C Bestimmen eines Sicherheitsrisikoniveaus aus der Wahrscheinlichkeit auf der Grundlage einer voreingestellten Zuordnungsbeziehung umfasst, wobei die Zuordnungsbeziehung einen Wertebereich der Wahrscheinlichkeit definiert, der jedem Niveau entspricht, oder wobei die Vorrichtung zur Bestimmung des Sicherheitsrisikos des Aufzugssystems eine der folgenden ist: eine Cloud-Rechenvorrichtung, ein Steuerungssystem zur Steuerung einer Mehrzahl von Aufzugssystemen und eine Steuerung im Aufzugssystem.

15. Nichtflüchtiges computerlesbares Speichermedium, wobei in dem computerlesbaren Speichermedium Anweisungen gespeichert sind, **dadurch gekennzeichnet, dass** das Verfahren nach einem der Ansprüche 1-7 durch Ausführen der Anweisungen durch einen Prozessor implementiert wird.

## Revendications

1. Procédé de détermination d'un risque de sécurité d'un système d'ascenseur, comprenant :
A. la génération d'un vecteur de caractéristiques sur la base au moins de données d'état de fonctionnement du système d'ascenseur, dans lequel le vecteur de caractéristiques comprend une composante correspondant à une combinaison sélectionnée parmi une pluralité de valeurs d'état d'une première catégorie de caractéristiques, les valeurs d'état de la première catégorie de caractéristiques étant déterminées sur la base des données d'état de fonctionnement ; et
B. la détermination d'une probabilité qu'un objet de transport soit coincé dans une cabine du système d'ascenseur à l'aide d'un modèle de réseau neuronal, dans lequel le vecteur de caractéristiques et la probabilité sont respectivement une variable d'entrée et une variable de sortie du modèle de réseau neuronal,
dans lequel, à l'étape A, le vecteur de caractéristiques est généré en outre sur la base d'un événement de sécurité, le vecteur de caractéristiques comprend en outre des composantes correspondant à des combinaisons des valeurs d'état de la première catégorie de caractéristiques et des valeurs d'état d'une seconde catégorie de caractéristiques, et les valeurs d'état de la seconde catégorie de caractéristiques sont déterminées sur la base de l'événement de sécurité,
**caractérisé en ce que**
les données d'état de fonctionnement décrivent une pluralité de types d'états de fonctionnement du système d'ascenseur, et dans lequel chaque valeur d'état de la première catégorie de caractéristiques comprend l'une des valeurs d'état suivantes de l'un des types d'états de fonctionnement : i) une valeur d'état avant la survenue de l'événement de sécurité ; ii) une valeur d'état au moment de la survenue de l'événement de sécurité ; et iii) une valeur d'état après la survenue de l'événement de sécurité.

2. Procédé selon la revendication 1, comprenant en outre :
C. la génération d'un résultat d'évaluation concernant le risque de sécurité sur la base de la probabilité, ou
D. l'entraînement du modèle de réseau neuronal, dans lequel des journaux d'exploitation du système d'ascenseur sont utilisés pour étiqueter des échantillons d'entraînement pour l'entraînement du modèle de réseau neuronal.

3. Procédé selon la revendication 1, dans lequel chaque composante du vecteur de caractéristiques correspond à l'une des combinaisons suivantes : i) une combinaison des valeurs d'état de la première catégorie de caractéristiques ; ii) une combinaison des valeurs d'état de la première catégorie de caractéristiques et des valeurs d'état de la seconde catégorie de caractéristiques.

4. Procédé selon la revendication 3, dans lequel l'étape A comprend :
A1. la génération de la pluralité de valeurs d'état de la première catégorie de caractéristiques à partir des données d'état de fonctionnement et la génération des valeurs d'état de la seconde catégorie de caractéristiques à partir de l'événement de sécurité ; et
A2. la génération du vecteur de caractéristiques à partir des valeurs d'état de la première catégorie de caractéristiques et des valeurs d'état de la seconde catégorie de caractéristiques.

5. Procédé selon la revendication 1, dans lequel l'étape A est réalisée en réponse à la survenue de l'événement de sécurité, ou dans lequel les types de l'événement de sécurité comportent un ou plusieurs des éléments suivants : une panne de courant, une panne de capteur, une panne du système de porte, une panne d'un composant mécanique et un mode de fonctionnement anormal du système d'ascenseur.

6. Procédé selon la revendication 1, dans lequel les types d'états de fonctionnement comportent un ou plusieurs des éléments suivants : un mode de fonctionnement du système d'ascenseur, un sens de déplacement de la cabine, un étage sur lequel se trouve la cabine, un état d'alignement de niveau de la cabine, un état de déplacement de la machine de traction, un état d'ouverture et de fermeture d'une porte de cabine et d'une porte d'étage, ou
dans lequel les valeurs d'état de la première catégorie de caractéristiques et les valeurs d'état de la seconde catégorie de caractéristiques sont représentées sous la forme d'un encodage One-Hot, et chaque composante du vecteur de caractéristiques est représentée sous la forme d'une valeur binaire.

7. Procédé selon la revendication 1, dans lequel l'étape C comprend la détermination d'un niveau du risque de sécurité à partir de la probabilité sur la base d'une relation de correspondance prédéfinie, dans lequel la relation de correspondance définit une plage de valeurs de la probabilité correspondant à chaque niveau, ou dans lequel le procédé est mis en œuvre par l'un des éléments suivants : un dispositif informatique en nuage, un système de commande pour la commande d'une pluralité de systèmes d'ascenseur et un dispositif de commande dans le système d'ascenseur.

8. Dispositif de détermination d'un risque de sécurité d'un système d'ascenseur, comprenant :
au moins un processeur (630) ;
au moins une mémoire (620) ; et
un programme informatique (640) stocké dans la mémoire qui, lorsqu'il est exécuté sur le processeur, entraîne les opérations suivantes :
A. la génération d'un vecteur de caractéristiques sur la base au moins de données d'état de fonctionnement du système d'ascenseur, dans lequel le vecteur de caractéristiques comprend une composante correspondant à une combinaison sélectionnée parmi une pluralité de valeurs d'état d'une première catégorie de caractéristiques, les valeurs d'état de la première catégorie de caractéristiques étant déterminées sur la base des données d'état de fonctionnement ; et
B. la détermination d'une probabilité qu'un objet de transport soit coincé dans une cabine du système d'ascenseur à l'aide d'un modèle de réseau neuronal, dans lequel le vecteur de caractéristiques et la probabilité sont respectivement une variable d'entrée et une variable de sortie du modèle de réseau neuronal,
dans lequel, à l'opération A, le vecteur de caractéristiques est généré en outre sur la base d'un événement de sécurité, le vecteur de caractéristiques comprend en outre des composantes correspondant à des combinaisons des valeurs d'état de la première catégorie de caractéristiques et des valeurs d'état d'une seconde catégorie de caractéristiques, et les valeurs d'état de la seconde catégorie de caractéristiques sont déterminées sur la base de l'événement de sécurité,
**caractérisé en ce que**
les données d'état de fonctionnement décrivent une pluralité de types d'états de fonctionnement du système d'ascenseur, et dans lequel chaque valeur d'état de la première catégorie de caractéristiques comprend l'une des valeurs d'état suivantes de l'un des types d'états de fonctionnement : i) une valeur d'état avant la survenue de l'événement de sécurité ; ii) une valeur d'état au moment de la survenue de l'événement de sécurité ; et iii) une valeur d'état après la survenue de l'événement de sécurité.

9. Dispositif de détermination du risque de sécurité du système d'ascenseur selon la revendication 8, dans lequel le programme informatique, lorsqu'il est exécuté sur le processeur, entraîne en outre l'opération suivante :
C. la génération d'un résultat d'évaluation concernant le risque de sécurité sur la base de la probabilité, ou
D. l'entraînement du modèle de réseau neuronal, dans lequel des journaux d'exploitation du système d'ascenseur sont utilisés pour étiqueter des échantillons d'entraînement pour l'entraînement du modèle de réseau neuronal.

10. Dispositif de détermination du risque de sécurité du système d'ascenseur selon la revendication 8, dans lequel chaque composante du vecteur de caractéristiques correspond à l'une des combinaisons suivantes : i) une combinaison des valeurs d'état de la première catégorie de caractéristiques ; ii) une combinaison des valeurs d'état de la première catégorie de caractéristiques et des valeurs d'état de la seconde catégorie de caractéristiques.

11. Dispositif de détermination du risque de sécurité du système d'ascenseur selon la revendication 10, dans lequel l'opération A comprend :
A1. la génération de la pluralité de valeurs d'état de la première catégorie de caractéristiques à partir des données d'état de fonctionnement et la génération des valeurs d'état de la seconde catégorie de caractéristiques à partir de l'événement de sécurité ; et
A2. la génération du vecteur de caractéristiques à partir des valeurs d'état de la première catégorie de caractéristiques et des valeurs d'état de la seconde catégorie de caractéristiques.

12. Dispositif de détermination du risque de sécurité du système d'ascenseur selon la revendication 8, dans lequel le programme informatique, lorsqu'il est exécuté sur le processeur, entraîne la réalisation de l'opération A en réponse à la survenue de l'événement de sécurité, ou dans lequel les valeurs d'état de la première catégorie de caractéristiques et les valeurs d'état de la seconde catégorie de caractéristiques sont représentées sous la forme d'un encodage One-Hot, et chaque composante du vecteur de caractéristiques est représentée sous la forme d'une valeur binaire.

13. Dispositif de détermination du risque de sécurité du système d'ascenseur selon la revendication 8, dans lequel les types d'états de fonctionnement comportent un ou plusieurs des éléments suivants : un mode de fonctionnement du système d'ascenseur, un sens de déplacement de la cabine, un étage sur lequel se trouve la cabine, un état d'alignement de niveau de la cabine, un état de déplacement de la machine de traction, un état d'ouverture et de fermeture d'une porte de cabine et d'une porte d'étage, ou, ou dans lequel les types de l'événement de sécurité comportent un ou plusieurs des éléments suivants : une panne de courant, une panne de capteur, une panne du système de porte, une panne d'un composant mécanique et un mode de fonctionnement anormal du système d'ascenseur.

14. Dispositif de détermination du risque de sécurité du système d'ascenseur selon la revendication 8, dans lequel l'opération C comprend la détermination d'un niveau du risque de sécurité à partir de la probabilité sur la base d'une relation de correspondance prédéfinie, dans lequel la relation de correspondance définit une plage de valeurs de la probabilité correspondant à chaque niveau, ou dans lequel le dispositif de détermination du risque de sécurité du système d'ascenseur est l'un des éléments suivants : un dispositif informatique en nuage, un système de commande pour la commande d'une pluralité de systèmes d'ascenseur et un dispositif de commande dans le système d'ascenseur.

15. Support de stockage non transitoire lisible par ordinateur, le support de stockage lisible par ordinateur contenant des instructions, **caractérisé en ce que** le procédé selon l'une quelconque des revendications 1 à 7 est mis en œuvre en exécutant les instructions par un processeur.
